# EUROPEAN PATENT APPLICATION

(11) **EP 4 183 605 A1**
(43) Date of publication of application: **24.05.2023**
(21) Application number: 22208513.6
(22) Date of filing: 21.11.2022
(51) Int. Cl.: B60H 1/00

(54) **IMPROVED AIR CHANNEL FOR A PUBLIC TRANSPORT VEHICLE**

(30) Priority: 23.11.2021 IT 202100029624
(71) Applicant: Iveco Czech Republic A.S., 56601 Vysoke Myto (CZ)
(72) Inventor: DUDYCHA, Tomas, 56601 VYSOKE MYTO (CZ); KREJCI, Pavel, 56601 VYSOKE MYTO (CZ)
(74) Representative: Studio Torta S.p.A.

(57) **Abstract**

Air channel (7) for a public transport vehicle, comprising a fixing portion (8) and a cover portion (9), the fixing portion (8) comprising a fixing plate (8b) configured to be fixed to a wall of the vehicle and a support portion (8a) extending from the fixing plate (8b), the cover portion (9) comprising at least a cover element (9', 9'') configured to be selectively connected to at least one between the fixing plate (8b) and the support portion (8a), the cover portion (9) delimiting spaces (11, 12) with the fixing portion (8) when connected to this latter, at least one (12) among the spaces (11, 12) being fluidly connected to an inner space of the vehicle.

## Description

### CROSS-REFERENCE TO RELATED APPLICATIONS

This patent application claims priority from Italian patent application no. 102021000029624 filed on November 23, 2021, the entire disclosure of which is incorporated herein by reference.

### TECHNICAL FIELD

The present invention concerns an air channel, in particular an air channel for a public transport vehicle.

The present invention finds its preferred, although not exclusive, application in a bus.

### BACKGROUND OF THE INVENTION

Public transport vehicles such as buses may comprise conditioning air apparatus configured to regulate the temperature of the space voted to house passengers.

In particular, buses are at least provided with heating means configured to supply within the passenger space a delivery flow of heated air for providing a comfortable temperature in colder days such as in autumn or winter.

The above conditioning means usually provides a flow of air having a delivery temperature set to vary the temperature in the passenger space to a target temperature. Such delivery air flow is provided to air channels configured to guide the air flow within at least part of the extension of the vehicle and to uniformly distribute the latter within said space.

Existing air channels are usually constituted by molded profiled elements that comprises a plurality of holes. Clearly the holes are provided by drilling and/or cutting. Therefore, such operation is long and increases the cost of manufacturing the vehicle.

Moreover, the fixation of such air channel is achieved by threaded elements that fix extremity portions of the air channels to the vehicle wall. Clearly such fixation increases inspection time for cleaning these later.

Therefore, the need is felt to reduce manufacturing costs and facilitate air channel inspection.

An aim of the present invention is to satisfy the above mentioned needs in a cost-effective and optimized manner.

### SUMMARY OF THE INVENTION

The aforementioned aim is reached by a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a portion of a public transport vehicle comprising an air channel according to the present invention;
- Figure 2 is a sectional view about lines II-II of figure 1 of an air channel for a public transport vehicle according to the present invention; and
- Figure 3 is a sectional view of the air channel of figure 2 during a mounting phase.

### DETAILED DESCRIPTION OF THE INVENTION

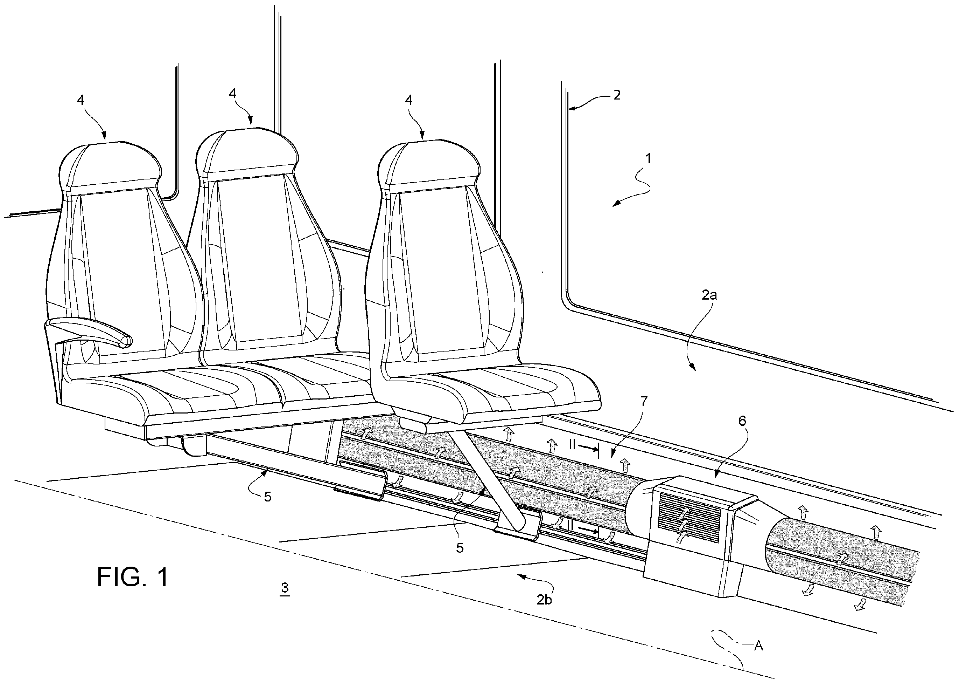

Figure 1 discloses a portion of a public transport vehicle 1, such as a bus, comprising a plurality of walls 2 configured to delimit an inner space 3 suitable for housing a plurality of passengers. In detail, the walls 2 comprises a plurality of lateral walls 2a, a floor 2b and a ceiling (not shown).

The vehicle 1, as known, comprises a plurality of seats 4 that fixedly carried by the vehicle's walls 2. In the shown embodiment, the seats 4 are carried by the lateral wall 2a thanks to an inclined support leg 5. Clearly, each leg 5 may support only one or a pair of seats 4.

Vehicle 1 further comprises air conditioning means 6 that are configured to aspire an airflow from the space 3, vary its temperature and/or humidity and provide a delivery airflow within the space 3 to modify the temperature and/or humidity therein.

Vehicle 1 further comprise at least an air channel 7 that is fluidly connected to air conditioning means 6 and configured to guide the delivery airflow along space 3. In the disclosed example the air channel 7 extends parallel to a longitudinal axis A of the vehicle 1, on at least part thereof.

In the disclosed embodiment, the air channel 7 is carried by lateral wall 2a in a position to be vertically comprised between the leg 5 and the seat 4.

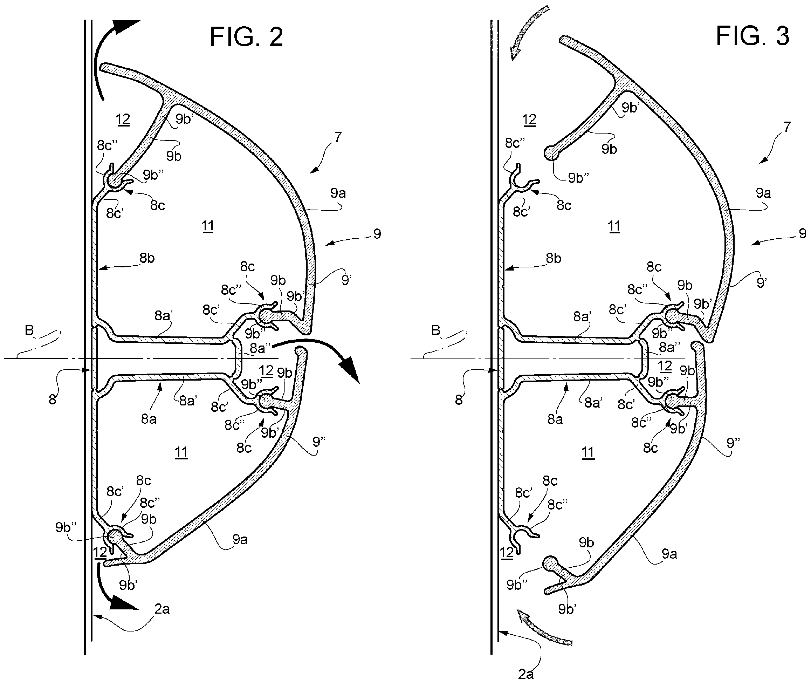

Making reference to figure 2, the air channel 7 comprise a fixing portion 8 configured to be fixed to the wall 2 of the vehicle, i.e. to lateral wall 2a in the present embodiment, and a cover portion 9 configured to be selectively fixed to the fixing portion 8 to define air passages as defined in the following.

The fixing portion 8 essentially comprise a fixing plate 8b configured to be fixed to the wall 2 of the vehicle and a support portion 8a configured to extend from the fixing plate 8b. In detail, the support portion 8a extends along an axis B that is preferably perpendicular to longitudinal axis A. Preferably, the fixing portion 8 is therefore a profiled element.

The fixing plate 8b may be fixed to the wall 2 of the vehicle via mechanical connection means, such as threaded means, or glued thereon.

Preferably, the support portion 8a extends from the middle of the fixing plate 8b, i.e. the fixing plate 8b extends equally along axis A from one side and the other of the support portion 8a. More preferably, the fixing portion 8 has a symmetrical shape about axis B.

In detail, the support portion 8a comprises a pair of cantilevered walls 8a' extending along axis B and preferably parallel to this latter and a top wall 8a" configured to joint connect together the cantilevered walls 8a'. The top wall 8a" is preferably parallel to fixing plate 8b.

The fixing portion 8 further comprises a plurality of coupling portions 8c configured to allow the connection of cover portions 9.

The coupling portions 8c are preferably placed in a symmetric way with respect to axis B and at least two coupling portions 8c are provided for each side with respect to axis B.

In detail, the in the proposed embodiment, two coupling portions 8c are provided for each side of the fixing portion 8. In further detail, a pair of coupling portions 8c is carried by the support portion 8a and a pair of coupling portions 8c is carried by the fixing plate 8b. In particular, the coupling portions 8c carried by the support portion 8a are fixed in the corner between the cantilevered walls 8a' and the top wall 8a"; the coupling portions 8c carried by the fixing plate 8b are fixed in extremity portions along axis A of the fixing plate 8b.

In particular, the coupling portion 8c comprises a link portion 8c' configured to be connected to the relative element to which they are connected and a seat potion 8c" configured to cooperate at contact with the cover portion 9 to allow its coupling to the fixing portion 8.

Preferably, the fixing portion 8 is realized as one piece, i.e. monolithic, and preferably realized in metal, such as aluminum.

Referring back to the cover portion 9, it comprises a cover plate 9a, preferably having a curved shape; in the disclosed exemplarily embodiment the cover plate 9a has a convex shape towards the space 3. In particular, the cover portion 9 comprises a pair cover element 9', 9" that are one separate with respect to the other and that are independently fixed to the fixing portion 8b.

The cover portion 9 further comprises a coupling portion 9b that extends from the cover plate 9a on the side opposite to the one faced to space 3 and configured to cooperate at contact with the coupling portion 8c of the fixing portion 8.

The coupling portion 9b comprises, similarly to the coupling portion 8c, a link portion 9b' configured to be connected to the cover element and a plug portion 9b" configured to cooperate at contact with fixing portion 8 as follows. In particular, the plug portion 9b" and the seat portion 8c" have a spherical shape.

In detail the plug portion 9b" has a diameter that is greater with respect to the seat portion 8c" thereby allowing their insertion therein with a preset preload that avoid any unwanted uncoupling of the cover from the fixing portion.

According to the proposed embodiment, each cover plate 9', 9" comprises a pair of coupling portions 9b configured to cooperate with the respective coupling portions 8c carried by fixing portion 8.

It is furthermore noticed that the plug portion 9b" when inserted in the seat portion 8c" defines a hinge connection. The presence of two coupling portions 9b/8c allows, when connected, to lock the respective cover element 9', 9" to the fixing portion 8 and, when only one of such two coupling portions 9b/8c is connected, allows a rotation of the cover element 9', 9" thereon.

It is furthermore noticed that each cover element 9', 9" is realized as one piece, i.e. monolithic, and preferably in polymeric material such as Vinylester, PA or epoxy; more preferably such polymeric material can be reinforced by glass fibers.

As shown in figure 2, the cover elements 9', 9", when coupled to the fixing portion 8 define with respect to this latter and wall 2 of the vehicle respective spaces 11, 12. At least one of such spaces 12 is in fluid communication with space 3.

In detail, according to the shown embodiment, it is noticed that the cover elements 9', 9" defines first spaces 11 isolated with respect to the space 3 that are comprised by cover plate 9a of each cover element 9', 9", part of the fixing plate 8b and one of the cantilevered portions 8a' of the support portion 8a. Furthermore, the cover elements 9', 9'' defines second spaces 12, in fluid communication with space 3. One of such spaces 12 is comprised by terminal portions of the two cover elements 9', 9" and the top wall 8a" of the support portion 8a, two over spaces 12 are comprised between each of the cover elements 9', 9", the wall 2a and a terminal portion of the fixing plate 8b.

In disclosed embodiment, it is noticed that the extension of cover plates 9a of each cover elements 9', 9" is designed so that they are distanced thereby providing a passage positioned above the top wall 8a" of the support portion 8a along direction of axis B and to not touch the wall 2a thereby providing a passage there between.

The second spaces 12 fluidly communicates with space 3 via such passages realized by the extension of the cover plates 9a of each cover element 9', 9". The passage section of such passages may vary along axis A, e.g. having a smaller passage section in proximity of conditioning means 6 and a greater passage section on the farthest position in order to optimize the fluid distribution along longitudinal axis A of the vehicle.

The operation of the above described air channel according to the invention is the following.

In a standard operation of the air channel 7, shown in figures 1 and 2, delivery air flow is provided by conditioning means 6 within the channel 7, in particular to second spaces 12. In this way, the delivery air flow flows along direction A and passes via passages between the cover plates 9a or the cover plate 9a the wall 2a in the space 3. The dimension of passages can be design in function of the flow quantity in order to allow a correct distribution of the delivery air flow, as said above. Clearly, on opposite side, the air channel 7 is closed by a head portion so that the air passes via the above described distribution.

In an assembling phase of the air channel, as shown in figure 3, it is necessary first to push the plug portion 9b" within the respective seat 8c" and then rotate the cover plate 9a about the hinge that they realize to so that the other plug portion 9b" is pushed within the respective seat 8c". The same operation can be repeated for the cover elements 9', 9" that are present.

Clearly, the disassembling operation is the inverse of the above described. The shape and the number of couplings between the cover portions 9 and the fixing portion 8 allows to maintain each cover element 9', 9" fixed to the fixing portion 8 during the ride of the vehicle and the use of the conditioning means 6.

In view of the foregoing, the advantages of the air channel and vehicle according to the invention are apparent.

The proposed system is very economic and of easy manufacturing with respect to known system. Indeed, it comprises elements that may be realized entirely by extrusion without need of machining or drilling.

Moreover, existing systems needs a greater number of elements to build the air channel in function of its length, while in the present it is necessary to provide only the fixation portion and the cover portion independently by the length of the channel.

Furthermore, the proposed system allows a very quick assembly and disassembly of the cover elements on the respective support. Accordingly, the maintenance and inspection time is reduced.

At the same time, the proposed coupling between the cover elements and the support portion allows a very stable coupling that avoids any unwanted disassembly during the travel of the vehicle.

It is furthermore noticed that the proposed symmetric shape of the fixing portion allows to use only half of this latter in case of reduced dimension for housing the air channel. In this way, the same element can be used for different typology of vehicles; clearly in such occurrence only a single cover element is present.

It is clear that modifications can be made to the described air channel and vehicle which do not extend beyond the scope of protection defined by the claims.

For example, shape or number of the described cover portions 9, fixing portion 8 or of coupling portions 8c/9b may vary according to the dimension of the vehicle.

## Claims

1. Vehicle (1) for public transport of passengers, said vehicle comprising a plurality of walls (2) connected together to define a space (3) for housing passengers extending along a longitudinal axis (A) of said vehicle (1), said vehicle (1) comprising conditioning means (6) configured to aspire an air flow from said space (3), to modify the temperature and/or humidity of said airflow and provide a delivery airflow, said vehicle (1) comprising an air channel (7) fluidly connected to said conditioning means (6) to provide said delivery airflow in said space (3), said air channel (7) comprising a fixing portion (8) and a cover portion (9) extending a longitudinal axis (A) of said vehicle (1), said fixing portion (8) comprising a fixing plate (8b) configured to be fixed to one among said walls (2) and a support portion (8a) extending from said fixing plate (8b), said cover portion (9) comprising at least a cover element (9', 9") each provided with a cover plate (9a) configured to be selectively connected to at least one between said fixing plate (8b) and said support portion (8a),
said cover portion (9) delimiting spaces (11, 12) with said fixing portion (8) when connected to this latter, at least one (12) among said spaces (11, 12) being fluidly connected to said space (3).

2. Vehicle according to claim 1, wherein said fixing portion (8) comprises at least a pair of coupling portions (8c) provided with a seat (8c"), said cover portion (9) comprises at least a pair of coupling portions (9b) provided with a plug portion (9b") configured to cooperate at contact with said seat (8c") to connect together said cover portion (9) and said fixing portion (8).

3. Vehicle according to claim 2, wherein said plug portion (9b") has a shape complementary to the shape of said seat (8c").

4. Vehicle according to claim 3, wherein the dimension of said seat (8c'') is smaller with respect to the dimension of said plug portion (9b") so that a preload is imparted when said plug portion (9b") is seated within said seat (8c") .

5. Vehicle according to any of claims 2 to 4, wherein said seat (8c") and said plug portion (9b") have a spherical shape, thereby cooperating as a hinge.

6. Vehicle according to any of claims 2 to 4, wherein said seat (8c") and said plug portion (9b") are connected to the respective fixing portion (8) and cover portion (9) by a link portion (8c', 9b').

7. Vehicle according to any of the preceding claims, wherein said fixing portion (8) is symmetric about an axis (B) perpendicular with respect to said longitudinal axis (A) .

8. Vehicle according to any of the preceding claims, wherein said fixing portion (8) and said at least one cover element (9', 9") are realized as one piece.

9. Vehicle according to any of the preceding claims, wherein said fixing portion (8) is a profiled element.

10. Vehicle according to any of said preceding claims, wherein at least one among said spaces (12) fluidly connected to the space (3) of said vehicle, is delimited by at least one between said cover element (9', 9"), and said fixing portion (8) and/ or at least one among said spaces (12) fluidly connected to the space (3) of said vehicle, is delimited by at least one between said cover element (9', 9"), said wall (2) and said fixing portion (8).

11. Vehicle according to claim 10, wherein the cover plates (9a) of each of said cover element (9', 9") are spaced one with the other and/or said wall (2) thereby allowing fluidic communication between said at least one among said spaces (12) and said space of said vehicle (1)

12. Vehicle according to claim 11, wherein said spacing varies along said longitudinal axis (A).

13. Vehicle according to any of said preceding claims, wherein said fixing portion (8) is realized in metal.

14. Vehicle according to any of said preceding claims, wherein said cover portion (9) is realized in a polymeric material or in a polymeric material reinforced with glass fibers.

15. Vehicle according to any of the preceding claims, wherein said vehicle (1) extends along a longitudinal axis (A) said channel (7) extending parallel to said longitudinal axis (A).

16. Vehicle according to any of the preceding claims, wherein said vehicle (1) comprises a pair of lateral walls (2a) and a plurality of seats (4), said channel (7) being carried by said lateral walls (2a) under said seats (4).
